# EUROPEAN PATENT APPLICATION

(11) **EP 3 264 257 A1**
(43) Date of publication of application: **03.01.2018**
(21) Application number: 17168846.8
(22) Date of filing: 28.04.2017
(51) Int. Cl.: G06F 3/147, G06F 17/30, G06K 9/00, G08B 13/196, G08B 17/12, G08B 19/00, H04N 7/18

(54) **IMAGE OUTPUTTING METHOD AND APPARATUS, COMPUTER PROGRAM AND RECORDING MEDIUM**

(30) Priority: 30.06.2016 CN 201610514003
(71) Applicant: Beijing Xiaomi Mobile Software Co., Ltd., Beijing 100085 (CN)
(72) Inventor: DING, Yi, Haidian District, Beijing 100085 (CN); MENG, Deguo, Haidian District, Beijing 100085 (CN); HOU, Enxing, Haidian District, Beijing 100085 (CN)
(74) Representative: Reeve, Nicholas Edward

(57) **Abstract**

The present invention relates to an image outputting method and apparatus, a computer program and a recording medium. The method comprises: acquiring data of frames collected by a target camera; acquiring a target image based on the data of frames; and controlling a target terminal to output an alert message which at least includes the target image. With this embodiment, when an emergency situation occurs in a user's home, the user can be aware of it at once, thereby increasing the effective utilization of the smart camera device.

## Description

### TECHNICAL FIELD

The present invention relates to the technical field of electronics, and more particularly to an image outputting method and apparatus, a computer program and a recording medium.

### BACKGROUND

With the continuous development of the smart terminal technology, various smart furniture and electrical appliances emerge constantly. Smart furniture and electrical appliances are more and more used in people's daily life and work, making people's life increasingly convenient. With the wide spread use of smart cameras, it is possible to remotely monitor the situation at home through smart cameras even when a user is not at home. However, in the related art, the user has to view monitoring records on his/her own initiative, in order to get knowledge of the situation in the home. If an emergency situation occurs in the home, the user cannot know it at once. Thus, the effective utilization of the smart cameras will be reduced.

### SUMMARY

In order to address the foregoing technical problems, the present invention provides an image outputting method and apparatus, a computer program and a recording medium.

According to a first aspect of the present invention, an image outputting method is provided. The method comprises: acquiring data of frames collected by a target camera; acquiring a target image based on the data of frames; and controlling a target terminal to output an alert message which at least includes the target image.

Optionally, controlling the target terminal to output the alert message comprises: controlling the target terminal to display the target image at a visible position.

Optionally, controlling the target terminal to display the target image at the visible position includes one or more of the following: controlling the target terminal to switch to displaying the target image; controlling the target terminal to display the target image in a desktop background; controlling the target terminal to display the target image in a lock screen background; and controlling the target terminal to display the target image in a floating window.

Optionally, acquiring the target image based on the data of frames comprises: acquiring a target image indicating an abnormal event based on the data of frames.

Optionally, acquiring the target image indicating an abnormal event based on the data of frames comprises: acquiring similarity between data of adjacent frames among the data of frames; acquiring target images corresponding to the data of adjacent frames, if the similarity is smaller than a predetermined threshold value.

Optionally, the abnormal event includes one or more of the following events: a stranger has entered a predetermined area; a location of an object in the predetermined area has changed; the predetermined area has been on fire.

According to a second aspect of the present invention, an image outputting apparatus is provided. The image outputting apparatus comprises: a first acquisition module configured to acquire data of frames collected by a target camera; a second acquisition module configured to acquire a target image based on the data of frames; and a controlling module configured to control a target terminal to output an alert message which at least includes the target image.

Optionally, the controlling module comprises: a controlling sub-module configured to control the target terminal to display the target image at a visible position.

Optionally, the controlling sub-module comprises one or more of the following: a first display controlling sub-module configured to control the target terminal to switch to displaying the target image; a second display controlling sub-module configured to control the target terminal to display the target image in a desktop background; a third display controlling sub-module configured to control the target terminal to display the target image in a lock screen background; and a fourth display controlling sub-module configured to control the target terminal to display the target image in a floating window.

Optionally, the second acquisition module comprises: a target image acquiring sub-module configured to acquire a target image indicating an abnormal event based on the data of frames.

Optionally, the target image acquiring sub-module comprises: a first acquiring sub-module configured to acquire similarity between data of adjacent frames among the data of frames; and a second acquiring sub-module configured to acquire target images corresponding to the data of adjacent frames, if the similarity is smaller than a predetermined threshold value.

Optionally, the abnormal event includes one or more of the following events: a stranger has entered a predetermined area; a location of an object in the predetermined area has changed; and the predetermined area has been on fire.

According to a third aspect of the present invention, an image outputting apparatus is provided. The image outputting apparatus comprises: a processor; and a memory storing instructions executable by the processor. The processor is configured to: acquire data of frames collected by a target camera; acquire a target image based on the data of frames; and control a target terminal to output an alert message which at least includes the target image.

In one particular embodiment, the steps of the image outputting method are determined by computer program instructions.

Consequently, according to a fourth aspect, the invention is also directed to a computer program for executing the steps of the image outputting method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by embodiments of the present invention may have the following beneficial technical effects.

According to the image outputting methods provided by the above embodiments of the present invention, data of frames collected by a target camera is acquired, a target image is acquired based on the data of frames, and a target terminal is controlled to output an alert message which at least includes the target image. Thus, when an emergency situation occurs in a user's home, the user can be aware of it at once, thereby increasing the effective utilization of the smart camera.

According to an image outputting method provided by one of the above embodiments of the present invention, data of frames collected by a target camera is acquired, a target image indicating an abnormal event is acquired based on the data of frames, and a target terminal is controlled to display the target image at a visible position. Thus, without opening a monitoring image display interface, a user can view the target image more quickly (upon occurrence of an abnormal event in a target monitored area) to get knowledge of the abnormal event, thereby increasing the effective utilization of the smart camera.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a diagram illustrating an exemplary system architecture where embodiments of the present invention are applicable according to an exemplary embodiment of the present invention.
Fig. 2 is a flowchart illustrating an image outputting method according to an exemplary embodiment of the present invention.
Fig. 3 is a flowchart illustrating another image outputting method according to an exemplary embodiment of the present invention.
Fig. 4 is a block diagram illustrating an image outputting apparatus according to an exemplary embodiment of the present invention.
Fig. 5 is a block diagram illustrating another image outputting apparatus according to an exemplary embodiment of the present invention.
Fig. 6 is a block diagram illustrating yet another image outputting apparatus according to an exemplary embodiment of the present invention.
Fig. 7 is a block diagram illustrating still another image outputting apparatus according to an exemplary embodiment of the present invention.
Fig. 8 is a structure schematic diagram illustrating an image outputting apparatus according to an exemplary embodiment of the present invention.

### DETAILED DESCRIPTION

Reference will now be made in detail to certain exemplary embodiments, examples of which are illustrated in the accompanying drawings. The following description refers to the accompanying drawings in which the same numbers in different figures represent the same or similar elements unless otherwise indicated. The implementations set forth in the following description of embodiments do not represent all implementations consistent with the invention. Instead, they are merely examples of apparatuses and methods consistent with aspects related to the invention as recited in the appended claims.

The terms used herein are for the purpose of illustrating the embodiments only, rather than limiting the present invention. The terms "a", "said" and "the" of singular forms used in the present description and the attached claims are also intended to include their plural forms, unless otherwise clearly specified in the context. It can also be appreciated that the term "and/or" as used herein refers to any or all possible combinations of one or more associated items as listed.

It can be appreciated that, while the terms "first", "second", "third" and so on may be used herein to describe various information, such information is not limited to these terms, which are only used to distinguish between different information of the same category. For example, the first information can also be referred to as the second information, and similarly the second information can also be referred to as the first information, without departing from the scope of the present invention. Depending on the context, the term "if" as used herein can be interpreted as "when", "while", or "in response to determining".

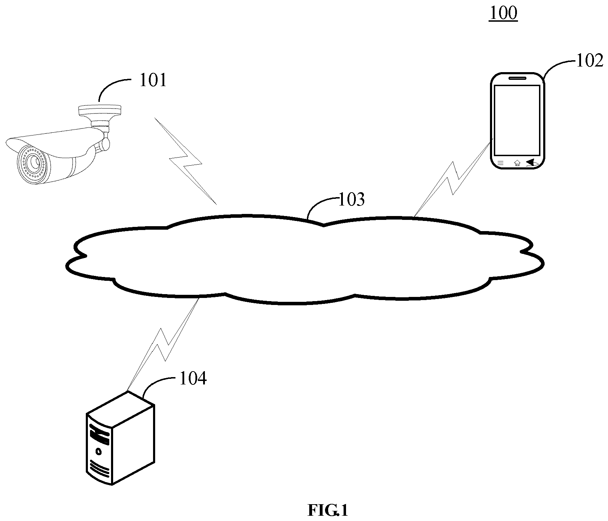

Fig. 1 is a schematic diagram of an exemplary system architecture where embodiments of the present invention are applicable.

As shown in Fig. 1, a system architecture 100 may include a camera device 101, a terminal device 102, a network 103, and a server 104. The network 103 is used for providing a communication link medium between the camera device 101 or the terminal device 102 and the server 104.

The camera device 101 may be one of various devices with a photographing function, and may comprise one or more cameras configured to capture images and a processor configured to control the cameras. The camera device 101 may interact with the server 104 via the network 103, so as to send collected data to the server 104 or receive control instructions sent by the server. The terminal device 102 may also interact with the server 104 via the network 103, so as to receive or send a request or information etc. The terminal device 102 may be one of a variety of electronic devices, including but not limited to mobile terminal devices such as smart phones, smart wearable devices, tablet PCs, Personal Digital Assistance (PDAs) and so on.

The server 104 can provide smart monitoring and management services, as well as a variety of other services. The server 104 can perform processing, such as storage and analysis, on the received data, and can also send information to the camera device 101 or the terminal device 102, etc. For example, the server 104 can receive the image data collected by the camera device 101, and analyze the received image data to determine whether an abnormal event has occurred in the area photographed by the camera device 101. If it is determined through analysis that there is an abnormal event in the area, it is possible to sort out the image data, acquire an abnormal image, and send the abnormal image to the terminal device 102 for viewing by the user. It can be understood that a server can provide one or more services and that the same service can be provided by a number of servers.

It should be understood that the number of camera devices, terminal devices, networks and servers in Fig. 1 is only illustrative. There may be any number of camera devices, terminal devices, networks and servers according to implementation requirements.

In the following, the present invention will be described in detail in combination with specific embodiments.

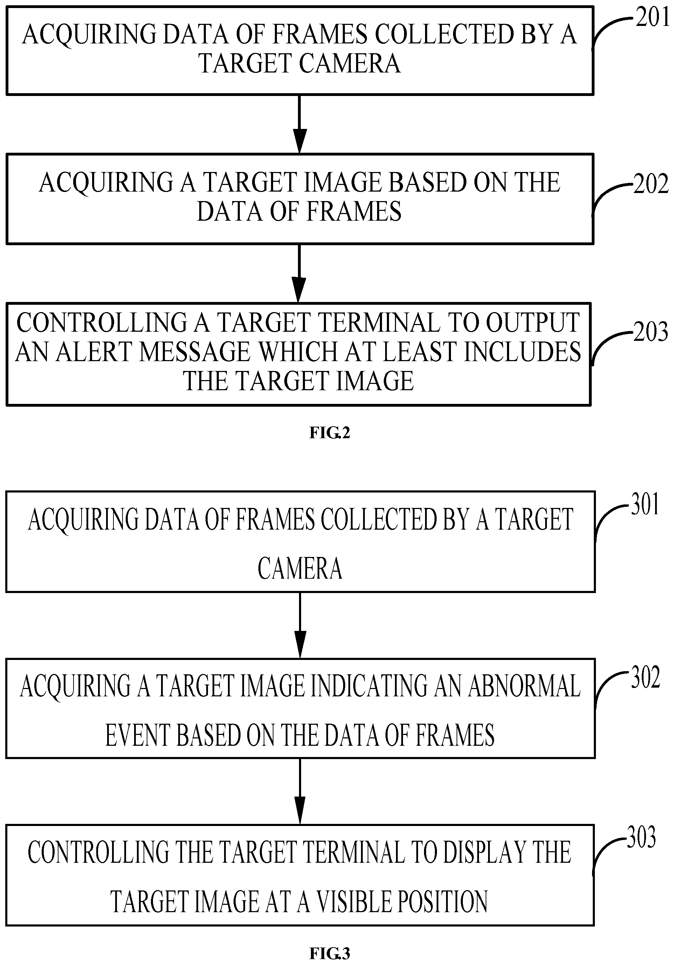

Fig. 2 is a flowchart illustrating an image outputting method according to an exemplary embodiment. The method may be applied to a smart camera device or a server. As shown, the method comprises the following steps.

At step 201, data of frames collected by a target camera is acquired.

In this embodiment, first, image data of each frame collected by the target camera is acquired for analysis and processing. The target camera is used to photograph a target monitored area. For example, if a user wants to photograph a doorway area, the camera photographing the doorway area may be used as a target camera. In this context, the target camera may be an electronic video camera taking video of the area being monitored, or an electronic or digital camera taking periodic photographic images of the area being monitored. In this way image data of a plurality of frames is generated.

At step 202, a target image is acquired based on the data of frames.

In this embodiment, the target image is an image that indicates or includes an abnormal event. For example, the target image may be an image in which a stranger entering the target monitored area is photographed, an image in which a change happening to an object in the target monitored area (e.g. a certain object in the target monitored area being blown down, or things hanging on a wall loosening and falling down etc.) is photographed, or an image in which the target monitored area being on fire is photographed, etc. It could be understood that the target image may be some other form of alert message, and specific contents and forms of the target image are not limited in the present invention.

In this embodiment, it is possible to analyze the acquired image data of each frame, and to determine whether the image corresponding to the data of the frame includes an abnormal event. If an abnormal event is included, then the image corresponding to the data of the frame may be determined and generated as a target image.

At step 203, a target terminal is controlled to output an alert message, which at least includes the target image. The target terminal may be a smartphone or other computer device operated by the same user interested in monitoring the area with the target camera.

In this embodiment, after acquiring the target image, it is possible to first generate an alert message which at least includes the target image and then transfer the alert message to a target terminal, so that the target terminal can present the alert message to the user. The target terminal is exactly the one used by the same user as the camera device acquiring the target image. For example, the target terminal may be a terminal having the same user account as the camera device, and may also be a terminal associated with the camera device, etc.

In this embodiment, the alert message may also include voice information, which may for example alert a user to check monitoring records. It may also include alarm information, such as an audible alarm with a predetermined sound. The alert message may also include text alert information, which may be for example pushed to alert a user to check monitoring records. It could be understood that the alert message may include some other form of alert message, and specific contents and forms of the alert message are not limited in the present invention.

According to the image outputting method provided by the foregoing embodiment of the present invention, data of frames collected by a target camera is acquired, a target image is acquired based on the data of frames, and a target terminal is controlled to output an alert message which at least includes the target image. Thus, when an emergency situation occurs in a user's home, the user can get knowledge of it at once, thereby increasing the effective utilization of the smart camera device.

Fig. 3 is a flowchart illustrating another image outputting method according to an exemplary embodiment, wherein the process of acquiring a target image based on data of frames and controlling a target terminal to output an alert message is further detailed. The method may be applied to a smart camera device or a server. As shown, the method comprises the following steps.

At step 301, data of frames collected by a target camera is acquired.

At step 302, a target image indicating an abnormal event is acquired based on the data of frames.

In this embodiment, the abnormal event may include one or more of the following events: a stranger has entered a predetermined area; a location of an object in the predetermined area has changed; and the predetermined area has been on fire etc. It could be understood that the abnormal event may be some other event, and specific contents and forms of the abnormal event are not limited in the present invention. The predetermined area may be a target monitored area photographed by the target camera, and the choice of the predetermined area is not limited in the present invention.

In this embodiment, if no abnormal event occurs, there will be no change between images corresponding to data of adjacent frames. If an abnormal event occurs, multiple images corresponding to data of adjacent frames recording the abnormal event will differ. Accordingly, it is possible to determine whether acquired data of a frame corresponds to a target image indicating an abnormal event, based on whether the acquired data of the frame changes or not.

To be more specific, first, a measure of the similarity between the image data of every two adjacent frames among the data of frames is acquired one by one. This can be done by using any implementable algorithm, and the specific way of acquiring similarity between data of adjacent frames is not limited in the present invention. For example, running a correlation function comparing the image date in one frame to the next can be used to generate a value indicating correlation or similarity between the frames. Next, it is determined whether the individual similarity measures for the adjacent frames are smaller than a predetermined threshold value. The predetermined threshold value may be set in advance or may be an empirical value. It could be understood that the predetermined threshold value may be any reasonable value, and the specific amount of the predetermined threshold value is not limited in the present invention. If the similarity value between the data of adjacent frames is smaller than the predetermined threshold value, then the images corresponding to the data of the adjacent frames can be determined as target images indicating that a change in the environment has occurred which should be notified to the user at the target terminal.

At step 303, the target terminal is controlled to display the target image at a visible position.

In this embodiment, controlling the target terminal to display the target image at a visible position may be implemented as one of the following: controlling the target terminal to display each target image respectively at the visible position; controlling the target terminal to display some ones selected from the target images at the visible position; and controlling the target terminal to display a video or a dynamic image, which is generated based on the target images, at the visible position. It could be understood that the present invention is not limited in this regard.

Specifically, controlling the target terminal to display the target image at a visible position may include one or more of the following: controlling the target terminal to switch to displaying the target image; controlling the target terminal to display the target image in a desktop background; controlling the target terminal to display the target image in a lock screen background; and controlling the target terminal to display the target image in a floating window.

In this embodiment, controlling the target terminal to switch to displaying the target image may be implemented as controlling the target terminal to display target images in turn at the visible position. For example, supposing there are five target images, then the five target images may be displayed one by one at a visible position. Each target image may be displayed for a predetermined period (e.g., 5 seconds or 10 seconds etc.)

Controlling the target terminal to display the target image in a desktop background may be implemented as changing the desktop background of the target terminal to the target image. For example, after acquiring the target image, if the target terminal is displaying the desktop, then it may change the desktop background to the target image directly. In this way, a user can view the target image more quickly and conveniently, without opening a monitoring image display interface.

Controlling the target terminal to display the target image in a lock screen background may be implemented as changing the lock screen background of the target terminal to the target image. For example, after acquiring the target image, if the present target terminal is in a screen-sleep status, then it may directly light up the screen and change the screen lock background to the target image. In this way, a user can view the target image more quickly and conveniently, without opening a monitoring image display interface.

Controlling the target terminal to display the target image in a floating window may be implemented as displaying the target image in the floating window of the target terminal screen. For example, after acquiring the target image, if the present target terminal is being used by the user, then it may generate a small floating window on the currently displayed interface and display the target image in this floating window. In this way, the user can view the target image more quickly and conveniently, without opening the monitoring image display interface. In this context, a floating window, may be any new window opened and displayed on the terminal.

It could be understood that there can be other ways of displaying the target image. Specific ways of displaying the target image are not limited in the present invention.

It should be noted that the same steps as those in the embodiment of Fig. 2 will not be described redundantly in the embodiment of Fig. 3 any longer. Reference can be made to the embodiment of Fig. 2 for the same contents.

According to the image outputting method provided by the foregoing embodiment of the present invention, data of frames collected by a target camera is acquired, a target image indicating an abnormal event based on the data of frames is acquired, and the target terminal is controlled to display the target image at a visible position. Thus, without opening a monitoring image display interface, a user can view the target image more quickly (upon occurrence of an abnormal event in a target monitored area) to get knowledge of the abnormal event, thereby increasing the effective utilization of the smart camera device.

It should be noted that, although operations of the method of the present invention have been described in a specific order in the attached drawings, this does not require or imply that these operations must be performed in accordance with the specific order or that all operations must be performed in order to achieve desired results. On the contrary, the order for executing steps illustrated in the flowchart can change. Additionally or alternatively, it is possible to omit some steps, combine multiple steps into one step for implementation, and/or divide one step into multiple steps for implementation.

Correspondingly to the foregoing embodiments of image outputting methods, the present invention further provides embodiments of image outputting apparatuses.

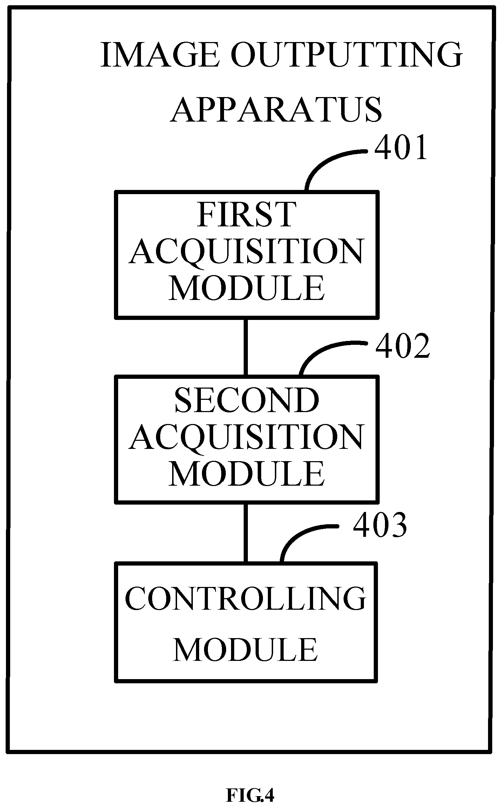

Fig. 4 is a block diagram illustrating an image outputting apparatus according to an exemplary embodiment of the present invention. As shown, the apparatus comprises: a first acquisition module 401, a second acquisition module 402 and a controlling module 403.

The first acquisition module 401 is configured to acquire data of frames collected by a target camera.

The second acquisition module 402 is configured to acquire a target image based on data of frames acquired by the first acquisition module 401.

The controlling module 403 is configured to control a target terminal to output an alert message which at least includes the target image acquired by the second acquisition module 402.

According to the image outputting apparatus provided by the foregoing embodiment of the present invention, data of frames collected by a target camera is acquired, a target image is acquired based on the data of frames, and the target terminal is controlled to output an alert message which at least includes the target image. Thus, when an emergency situation occurs in a user's home, the user can be aware of it at once, thereby increasing the effective utilization of the smart camera device.

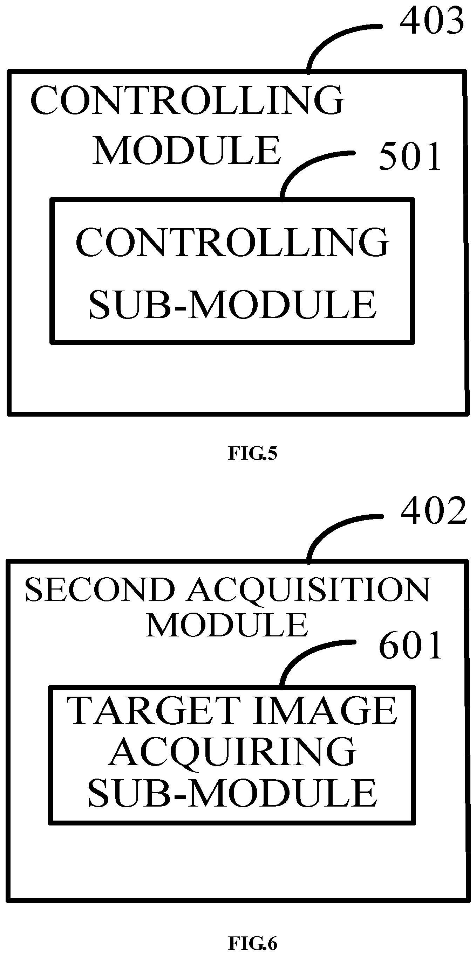

Fig. 5 is a block diagram illustrating another image outputting apparatus according to an exemplary embodiment of the present invention, which is on the basis of the above embodiment shown in Fig. 4. As shown, the controlling module 403 may comprise a controlling sub-module 501.

The controlling sub-module 501 is configured to control the target terminal to display the target image at a visible position.

In some optional embodiments, the controlling sub-module 501 may include one or more of a first display controlling sub-module, a second display controlling sub-module, a third display controlling sub-module and a fourth display controlling sub-module.

The first display controlling sub-module is configured to control the target terminal to switch to displaying the target image.

The second display controlling sub-module is configured to control the target terminal to display the target image in a desktop background.

The third display controlling sub-module is configured to control the target terminal to display the target image in a screen lock background.

The fourth display controlling sub-module is configured to control the target terminal to display the target image in the floating window.

Fig. 6 is a block diagram illustrating another image outputting apparatus according to an exemplary embodiment of the present invention, which is on the basis of the foregoing embodiment shown in Fig. 4. As shown, the second acquisition module 402 may comprise a target image acquiring sub-module 601.

The target image acquiring sub-module 601 is configured to acquire a target image indicating an abnormal event based on the foregoing data of frames.

According to the image outputting apparatus provided by the foregoing embodiment of the present invention, a target image indicating an abnormal event is acquired based on the data of frames, and the target terminal is controlled to output an alert message which at least includes the target image. Thus, when an emergency situation occurs in a user's home, the user can be aware of it at once, thereby increasing the effective utilization of the smart camera device.

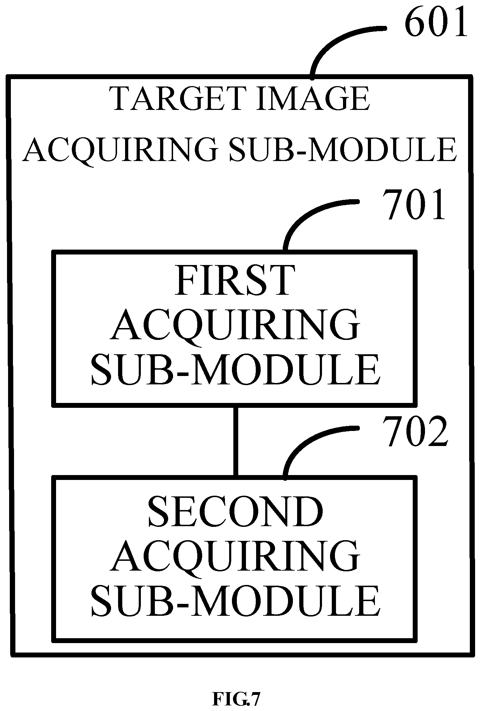

Fig. 7 is a block diagram illustrating another image outputting apparatus according to an exemplary embodiment of the present invention, which is on the basis of the foregoing embodiment shown in Fig. 6. As shown, the target image acquiring sub-module 601 may comprise a first acquiring sub-module 701 and a second acquiring sub-module 702.

The first acquiring sub-module 701 is configured to acquire similarity between data of adjacent frames among the data of frames.

The second acquiring sub-module 702 is configured to acquire target images corresponding to the data of adjacent frames, if the similarity acquired by the first acquiring sub-module 701 is smaller than a predetermined threshold value.

According to the image outputting apparatus provided by the foregoing embodiment of the present invention, similarity between data of adjacent frames among the data of frames is acquired; images corresponding to the data of adjacent frames are acquired as target images, if the similarity is smaller than a predetermined threshold value; and the target terminal is controlled to output an alert message which at least includes the target images. Thus, when an emergency situation occurs in a user's home, the user can be aware of it at once, thereby increasing the effective utilization of the smart camera device.

In some optional embodiments, the abnormal event may include one or more of the following events: a stranger has entered a predetermined area; a location of an object in the predetermined area has changed; and the predetermined area has been on fire.

It should be understood that, the above apparatus may be set in advance in a smart camera device or in a server, and may also be loaded into the smart camera device or the server through downloading etc. Respective modules in the apparatus can cooperate with units in the smart camera device or the server to implement the image outputting solutions.

For the apparatus embodiment, reference can be made to the corresponding description of the method embodiment since it substantially corresponds to the method embodiment. The apparatus embodiment as described above is illustrative only. Those units described as discrete components may or may not be physically separated. Those components shown as units may or may not be physical units, i.e., they can either be co-located, or distributed over a number of network elements. Some or all of the modules can be selected as desired to achieve the object of the present invention, as can be understood and implemented by those skilled in the art without any inventive efforts.

Correspondingly, the present invention further provides an image outputting apparatus. The image outputting apparatus comprises a processor; and a memory storing instructions executable by the processor. The processor is configured to acquire data of frames collected by a target camera, acquire a target image based on the data of frames and control a target terminal to output an alert message which at least includes the target image.

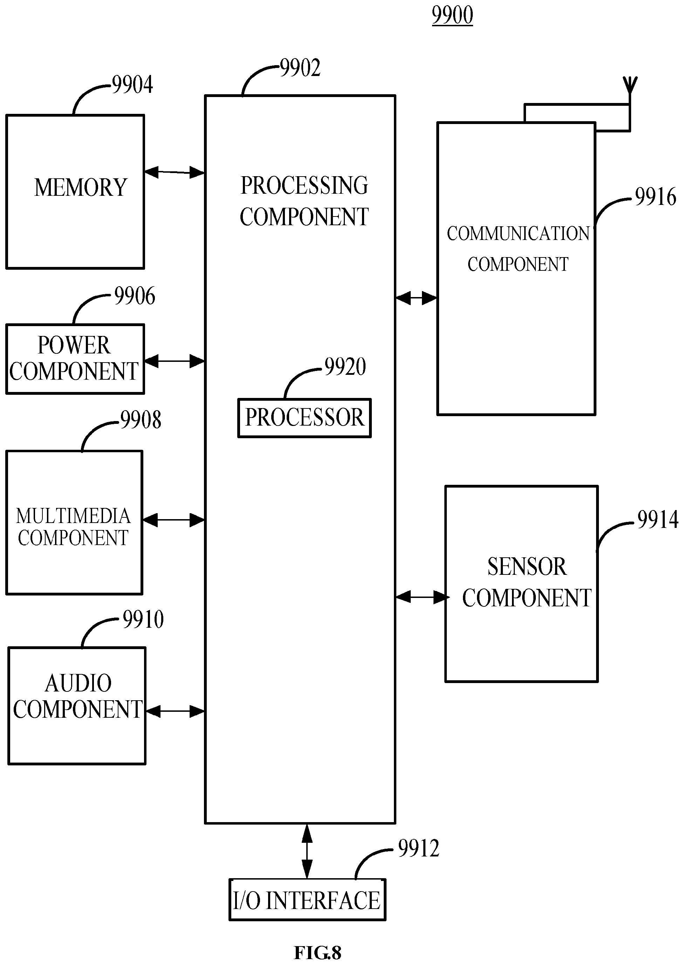

Fig. 8 is a structure schematic diagram illustrating an image outputting apparatus 9900 according to an exemplary embodiment. For example, the apparatus 9900 may be a mobile phone, a computer, a digital broadcast terminal, a messaging device, a gaming console, a tablet, a medical device, exercise equipment, a personal digital assistant or the like.

Referring to Fig. 8, the apparatus 9900 may include one or more of the following components: a processing component 9902, a memory 9904, a power component 9906, a multimedia component 9908, an audio component 9910, an input/output (I/O) interface 9912, a sensor component 9914 and a communication component 9916.

The processing component 9902 generally controls the overall operations of the apparatus 9900, for example, display, phone call, data communication, camera operation and recording operation. The processing component 9902 may include one or more processors 9920 to execute instructions to perform all or part of the steps in the above described methods. In addition, the processing component 9902 may include one or more modules to facilitate the interaction between the processing component 9902 and other components. For example, the processing component 9902 may include a multimedia module to facilitate the interaction between the processing component 9908 and the processing component 9902.

The memory 9904 is configured to store various types of data to support the operation performed on the apparatus 9900. Examples of such data include instructions for any applications or methods operated on the apparatus 9900, contact data, phonebook data, messages, pictures, video, etc. The memory 9904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 9906 provides power to various components of the apparatus 9900. The power component 9906 may include a power supply management system, one or more power sources, and any other components associated with the generation, management, and distribution of power in the apparatus 9900.

The multimedia component 9908 includes a screen providing an output interface between the apparatus 9900 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 9908 includes a front camera and/or a rear camera. The front camera and the rear camera may receive external multimedia data while the apparatus 9900 is in an operation mode, such as a photographing mode or a video mode. Each of the front camera and the rear camera may be a fixed optical lens system or have focus and optical zoom capability.

The audio component 9910 is configured to output and/or input audio signals. For example, the audio component 9910 includes a microphone ("MIC") configured to receive an external audio signal when the apparatus 9900 is in an operation mode, such as a call mode, a recording mode, and a voice recognition mode. The received audio signal may be further stored in the memory 9904 or transmitted via the communication component 9916. In some embodiments, the audio component 9910 further includes a speaker to output audio signals.

The I/O interface 9912 provides an interface between the processing component 9902 and peripheral interface modules, such as a keyboard, a click wheel, buttons, and the like. The buttons may include, but are not limited to, a home button, a volume button, a starting button, and a locking button.

The sensor component 9914 includes one or more sensors to provide status assessments of various aspects of the apparatus 9900. For instance, the sensor component 9914 may detect an open/closed status of the apparatus 9900, relative positioning of components, e.g., the display and the keypad, of the apparatus 9900, a change in position of the apparatus 9900 or a component of the apparatus 9900, a presence or absence of user contact with the apparatus 9900, an orientation or an acceleration/deceleration of the apparatus 9900, and a change in temperature of the apparatus 9900. The sensor component 9914 may include a proximity sensor configured to detect the presence of nearby objects without any physical contact. The sensor component 9914 may also include a light sensor, such as a CMOS or CCD image sensor, for use in imaging applications. In some embodiments, the sensor component 9914 may also include an accelerometer sensor, a gyroscope sensor, a magnetic sensor, a pressure sensor, a microwave sensor or a temperature sensor.

The communication component 9916 is configured to facilitate wired or wireless communication between the apparatus 9900 and other devices. The apparatus 9900 can access a wireless network based on a communication standard, such as WiFi, 2G, or 3G, or a combination thereof. In one exemplary embodiment, the communication component 9916 receives a broadcast signal or broadcast related information from an external broadcast management system via a broadcast channel. In one exemplary embodiment, the communication component 9916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 9900 may be implemented with one or more application specific integrated circuits (ASIC), digital signal processors (DSP), digital signal processing devices (DSPD), programmable logic devices (PLD), field programmable gate arrays (FPGA), controllers, micro-controllers, microprocessors, or other electronic components, for performing the above described methods.

In exemplary embodiments, there is also provided a non-transitory computer-readable storage medium including instructions, such as included in the memory 9904, executable by the processor 9920 of the apparatus 9900, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the appended claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. An image outputting method, comprising:
acquiring (201, 301) data of frames collected by a target camera;
acquiring (202) a target image based on the data of frames; and
controlling (203) a target terminal to output an alert message which at least includes the target image.

2. The method according to claim 1, wherein
controlling (203) the target terminal to output the alert message comprises:
controlling (303) the target terminal to display the target image at a visible position.

3. The method according to claim 2, wherein
controlling (303) the target terminal to display the target image at the visible position includes one or more of the following:
controlling the target terminal to switch to displaying the target image;
controlling the target terminal to display the target image in a desktop background;
controlling the target terminal to display the target image in a lock screen background; and
controlling the target terminal to display the target image in a floating window.

4. The method according to claim 1, wherein
acquiring (202) the target image based on the data of frames comprises:
acquiring (302) a target image indicating an abnormal event based on the data of frames.

5. The method according to claim 4, wherein
acquiring the target image indicating an abnormal event based on the data of frames comprises:
acquiring similarity between data of adjacent frames among the data of frames; and
acquiring target images corresponding to the data of adjacent frames, if the similarity is smaller than a predetermined threshold value.

6. The method according to any of claims 1-5, wherein
the abnormal event includes one or more of the following events:
a stranger has entered a predetermined area;
a location of an object in the predetermined area has changed; and
the predetermined area has been on fire.

7. An image outputting apparatus, comprising:
a first acquisition module (401) configured to acquire data of frames collected by a target camera;
a second acquisition module (402) configured to acquire a target image based on the data of frames; and
a controlling module (403) configured to control a target terminal to output an alert message which at least includes the target image.

8. The apparatus according to claim 7, wherein the controlling module (403) comprises:
a controlling sub-module (501) configured to control the target terminal to display the target image at a visible position.

9. The apparatus according to claim 8, wherein
the controlling sub-module comprises one or more of the following:
a first display controlling sub-module configured to control the target terminal to switch to displaying the target image;
a second display controlling sub-module configured to control the target terminal to display the target image in a desktop background;
a third display controlling sub-module configured to control the target terminal to display the target image in a lock screen background; and
a fourth display controlling sub-module configured to control the target terminal to display the target image in a floating window.

10. The apparatus according to claim 7, wherein the second acquisition module (402) comprises:
a target image acquiring sub-module (601) configured to acquire a target image indicating an abnormal event based on the data of frames.

11. The apparatus according to claim 10, wherein the target image acquiring sub-module (601) comprises:
a first acquiring sub-module (701) configured to acquire similarity between data of adjacent frames among the data of frames; and
a second acquiring sub-module (702) configured to acquire target images corresponding to the data of adjacent frames, if the similarity is smaller than a predetermined threshold value.

12. The apparatus according to any of claims 7-11, wherein
the abnormal event includes one or more of the following events:
a stranger has entered a predetermined area;
a location of an object in the predetermined area has changed; and
the predetermined area has been on fire.

13. An image outputting apparatus, comprising:
a processor (9920); and
a memory (9904) storing instructions executable by the processor (9920),
wherein the processor (9920) is configured to perform the image outputting method according to any of claims 1 to 6.

14. A computer program including instructions for executing the steps of an image outputting method according to any of claims 1 to 6 when said program is executed by a computer.

15. A recording medium readable by a computer and having recorded thereon a computer program including instructions for executing the steps of an image outputting method according to any of claims 1 to 6.
